# EUROPÄISCHE PATENTANMELDUNG

(11) **EP 0 565 999 A2**
(43) Veröffentlichungstag der Anmeldung: **20.10.1993**
(21) Anmeldenummer: 93105690.7
(22) Anmeldetag: 06.04.1993
(51) Int. Cl.: G02B 6/32, G02B 6/30, G02B 6/38, G02B 6/42

(54) **Anordnung zur optischen Kopplung von zwei Gruppen von Wellenleitern**

(30) Priorität: 16.04.1992 DE 4212857
(71) Anmelder: SIEMENS AKTIENGESELLSCHAFT, D-80333 München (DE)
(72) Erfinder: Auracher, Franz, Dr., W-8021 Baierbrunn (DE)

(57) **Zusammenfassung**

Eine mit hoher Positioniergenauigkeit und gutem Koppelwirkungsgrad herstellbare Anordnung zur Erzeugung einer optischen Kopplung zwischen mehreren ersten optischen Wellenleitern (1) eines Fleckdurchmessers und mehreren zweiten optischen Wellenleitern (2) eines anderen Fleckdurchmessers weist eine zwischen einander gegenüberliegenden Endflächen der ersten und zweiten Wellenleiter angeordnete Platte (4) mit einer den ersten Wellenleitern zugekehrten Flachseite (41) und einer den zweiten Wellenleitern zugekehrten Flachseite (42) auf und zumindest einer Flachseite der Platte sind konische Vertiefungen (40) zur Halterung von Linsen (3) ausgebildet, die sich von der einen Flachseite in Richtung zur anderen Flachseite im Durchmesser verjüngen. Bei einer anderen solchen Anordnung sind auf eine Flachseite der Platte planare Linsen aufgebracht und es kann auf Vertiefungen verzichtet werden.

## Beschreibung

Die Erfindung betrifft eine Anordnung zur Erzeugung einer optischen Kopplung zwischen mehreren ersten optischen Wellenleitern und mehreren zweiten optischen Wellenleitern nach dem Oberbegriff des Anspruchs 1 oder 2.

Bei IOCs (IOC bedeutet integrated optic circuit oder planare optische Wellenleiterschaltung) oder hybriden optischen Schaltungen besteht häufig die Aufgabe an eine Vielzahl von Wellenleitern, meist mit gleichem Abstand zwischen ihren Achsen, an Glasfasern oder eine weitere optische Wellenleiterschaltung anzukoppeln. Diese Aufgabe ist besonders schwierig, wenn die Fleckdurchmesser der in den verwendeten Wellenleitern geführten optischen Wellen sehr klein sind und zudem nicht zu den Fleckdurchmessern der in den anzukoppelnden Glasfasern oder der zweiten optischen Wellenleiterschaltung geführten optischen Wellen passen.

Typische Fleckdurchmesser der in Monomode-Glasfasern für 1,3 bis 1,5 µm Wellenlänge geführten optischen Wellen liegen bei 10 µm. Dagegen haben Wellenleiter von IOCs - insbesondere im III/V-Materialsystem (GaAlAs, InGaAsP) - typische Fleckdurchmesser von 2 µm. Um einen guten Koppelwirkungsgrad zu erreichen, müssen die Fleckdurchmesser, z.B. durch optische Linsen oder Taper , aneinander angepaßt werden und die Positionen der Flecke zueinander sehr genau justiert werden. Beispielsweise muß für die oben angegebenen Fleckdurchmesser eine laterale Justiergenauigkeit der Achse eines Wellenleiters des IOCs bezüglich des mittels der Linse oder des Tapers verkleinerten Faserflecks auf etwa ± 0,5 µm gefordert werden, während für die axiale Richtung etwa 2 µm zulässig sind.

Es ist eine Anordnung nach dem Oberbegriff des Anspruchs 1 bekannt, die zur Erzeugung einer optischen Kopplung zwischen mehreren Wellenleitern eines IOCs und mehreren Glasfasern dient. Bei dieser Anordnung sind die Fasern in V-Nuten angeordnet und gehaltert, die in einer Oberfläche eines Trägerkörpers ausgebildet sind. Die Fasern sind dabei so gehaltert, daß sie vor einer Randkante der Oberfläche enden, so daß ihre Endflächen im Abstand von dieser Randkante angeordnet sind. Zwischen der Randkante und den Endflächen der Fasern sind in der Oberfläche in einem Abstand von den Endflächen Vertiefungen zur Aufnahme und Halterung von Kugellinsen ausgebildet. Jede dieser Vertiefungen hat rechteckförmigen Querschnitt und verjüngt sich in Richtung senkrecht zur Oberfläche und zum Inneren des Trägerkörpers pyramidenförmig von einem Maximaldurchmesser auf einen Minimaldurchmesser > 0. Zwischen jeder Endfläche einer Faser und der vor dieser Endfläche ausgebildeten konischen Vertiefung ist ein Verbindungsgraben in der Oberfläche des Trägerkörpers ausgebildet, der eine ungestörte Ausbreitung einer optischen Welle zwischen der in dieser Vertiefung gehalterten Kugellinse und dieser Endfläche gewährleistet.

Die Wellenleiter des IOC enden an einer Randkante der Oberfläche des Substrats, auf dem sie integriert sind, so daß die Endflächen dieser Wellenleiter in dieser Randkante liegen. Die Randkante des IOC wird so gegenüber der Randkante des Trägerkörpers für die Fasern angeordnet, daß jeder Endfläche eines Wellenleiters des IOC eine Endfläche einer Faser gegenüberliegt, wobei sich zwischen jedem Paar einander gegenüberliegender Endflächen eine Kugellinse befindet.

Der Trägerkörper für die Fasern dieser bekannten Anordnung besteht aus Silizium, in welchem die V-Nuten, die Verbindungsgräben und die konischen Vertiefungen durch Vorzugsätzen hergestellt werden. Breite und Tiefe der geätzten Strukturen können typisch mit einer Genauigkeit von etwa einem µm eingehalten werden. Dies reicht für die Positionierung der Fasern bezüglich der Linsen aus. Für die Lagegenauigkeit der Linsen bezüglich der Achsen des IOC müssen jedoch etwa 0,5 µm gefordert werden. Unterätzungen der für die Herstellung der geätzten Strukturen verwendeten Maske oder eine inhomogene Ätzrate über der Oberfläche des Trägerkörpers aus Silizium führen jedoch zu wesentlich größeren Abweichungen der Mittelpunkte der Kugellinsen von ihrer Soll-Lage. Damit erscheint diese Methode nicht geeignet, die gestellten extremen Toleranzanforderungen zu erfüllen. Nachteilig ist außerdem, daß die Packungsdichte der Wellenleiter durch die relativ großen Kugellinsen mit einem Durchmesser ≦ 250 µm begrenzt ist.

Es ist auch bereits eine Anordnung zur Erzeugung einer optischen Kopplung zwischen mehreren Wellenleitern eines IOC und mehreren Glasfasern vorgeschlagen, bei welcher jeder Endfläche eines Wellenleiters dieses IOC ein Ende eines zu diesem Ende hin taperförmig sich verjüngenden Endabschnitts einer Faser gegenüberliegt.

Bei dieser Anordnung sind die Fasern in V-Nuten in einer Oberfläche eines Trägerkörpers so angeordnet und gehaltert, daß die taperförmigen Endabschnitte der Faser über eine Randkante der Oberfläche des Trägerkörpers frei hinausstehen. Die Positionen der Enden der taperförmigen Endabschnitte werden durch eine Lochmaske definiert. Diese Lochmaske besteht aus einer zwischen den Wellenleitern des IOC und den Fasern angeordneten Platte mit einer den Wellenleitern zugekehrten Flachseite und einer den Fasern zugekehrten Flachseite, wobei in der Platte von einer Flachseite zur anderen durchgehende Löcher ausgebildet sind, die sich von der den Fasern zugekehrten Flachseite in Richtung zu der den Wellenleitern des IOC zugekehrten Flachseite von einem Maximaldurchmesser, der größer als der Durchmesser der Fasern ist, konisch auf einen Minimaldurchmesser verjüngen, der kleiner oder gleich dem Durchmesser der Enden der taperförmigen Endabschnitte ist.

Die Platte besteht aus einer Silizium-Scheibe, in welcher die durchgehenden konischen Löcher mittels Vorzugsätzens hergestellt werden. Der Vorteil liegt darin, daß die Lochzentren mittels Planartechnologie sehr genau definiert werden können. Laterale Abweichungen der Lochzentren von den Sollpositionen können sich dadurch ergeben, daß die Seitenflanken der pyramidenförmig konischen Löcher unterschiedlich schnell geätzt werden (die Positionen der Löcher werden auf der den Wellenleitern des IOC abgekehrten Flachseite der Siliziumscheibe definiert) oder die verwendete Ätzmaske asymmetrisch unterätzt wird. Die größten Fehler in der Position der Enden oder Spitzen der taperförmigen Endabschnitte dürften jedoch auftreten, wenn kleine Ausbrüche von wenigstens einem µm an einer Berührungsstelle des taperförmigen Endabschnitts mit der Platte im Loch auftreten oder der taperförmige Endabschnitt selbst Unsymmetrien aufweist. Beides erscheint besonders problematisch.

Der in den Ansprüchen 1 und 2 angegebenen Erfindung liegt die Aufgabe zugrunde, eine Anordnung zur Erzeugung einer optischen Kopplung zwischen mehreren ersten Wellenleitern und mehreren zweiten Wellenleitern zu schaffen, welche eine optische Kopplung zwischen ersten optischen Wellenleitern, in denen jeweils eine optische Welle mit einem ersten Fleckdurchmesser geführt ist, und mehreren zweiten optischen Wellenleitern, in denen jeweils eine optische Welle mit einem vom ersten Fleckdurchmesser verschiedenen zweiten Fleckdurchmesser geführt ist, mit hoher Positioniergenauigkeit und gutem Koppelwirkungsgrad ermöglicht ist.

Die erfindungsgemäßen Anordnungen sind vorteilhaft auch zur Erzeugung einer optischen Kopplung zwischen mehreren ersten optischen Wellenleitern und mehreren zweiten optischen Wellenleitern anwendbar, in denen die Fleckdurchmesser der in diesen Wellenleitern geführten optischen Wellen gleich sind.

Bevorzugte und vorteilhafte Ausgestaltungen der erfindungsgemäßen Vorrichtungen gehen aus den Ansprüchen 3 bis 17 hervor.

Die Erfindung wird anhand der Figuren in der nachfolgenden Beschreibung beispielhaft näher erläutert. Es zeigen:
- Figur 1: teilweise im Schnitt und ausschnittsweise ein erstes Ausführungsbeispiel der Erfindung mit Kugellinsen,
- Figur 2: im Schnitt und ausschnittsweise eine erfindungsgemäße Platte mit durchgehenden Öffnungen und darin angeordneten Kugellinsen eines zweiten Ausführungsbeispiels der Erfindung, wobei die ersten und zweiten Wellenleiter fortgelassen sind,
- Figur 3: im Schnitt und ausschnittsweise eine erfindungsgemäße Platte mit Vertiefungen auf beiden Flachseiten und darin paarweise angeordneten Kugellinsen eines dritten Ausführungsbeispiels der Erfindung, wobei die ersten und zweiten Wellenleiter fortgelassen sind,
- Figur 4: im Schnitt und ausschnittsweise eine erfindungsgemäße Platte mit durchgehenden Öffnungen und darin paarweise angeordneten Kugellinsen eines vierten Ausführungsbeispiels der Erfindung, wobei die ersten und zweiten Wellenleiter fortgelassen sind,
- Figur 5: im Schnitt und ausschnittsweise eine Platte mit Vertiefungen auf einer Flachseite und planen Linsen auf der anderen Flachseite der Platte eines fünften Ausführungsbeispiels der Erfindung, wobei in die Vertiefungen eine angekoppelte Faser als erster oder zweiter Wellenleiter ragt, die zweiten bzw. ersten Wellenleiter dagegen fortgelassen sind,
- Figur 6: eine Draufsicht auf den Gegenstand nach Figur 5 von rechts,
- Figur 7: im Schnitt und ausschnittsweise eine Platte mit planen Linsen auf einer Flachseite und einer angekoppelten Faser als erster oder zweiter Wellenleiter auf der anderen Flachseite der Platte eines sechsten Ausführungsbeispiels der Erfindung, wobei die zweiten bzw. ersten Wellenleiter fortgelassen sind, und
- Figur 8: in Draufsicht eine erfindunsgemäße Anordnung mit einer selbsttätigen Justiereinrichtung.

Die Figuren sind nicht maßstäblich. Bei allen Figuren ist beispielhaft vorausgesetzt, daß die ersten Wellenleiter die Wellenleiter eines IOC und die zweiten Wellenleiter optische Fasern oder Wellenleiter einer weiteren Wellenleiterschaltung (eines weiteren IOC) sind. Ebensogut könnten die Fasern die ersten und die Wellenleiter des IOC die zweiten Wellenleiter sein. Auch ist bei allen Figuren beispielhaft vorausgesetzt, daß die ersten Wellenleiter links und die zweiten Wellenleiter rechts von der erfindungsgemäßen Platte angeordnet sind. Ebensogut könnten die ersten Wellenleiter rechts und die zweiten Wellenleiter links von dieser Platte angeordnet sein.

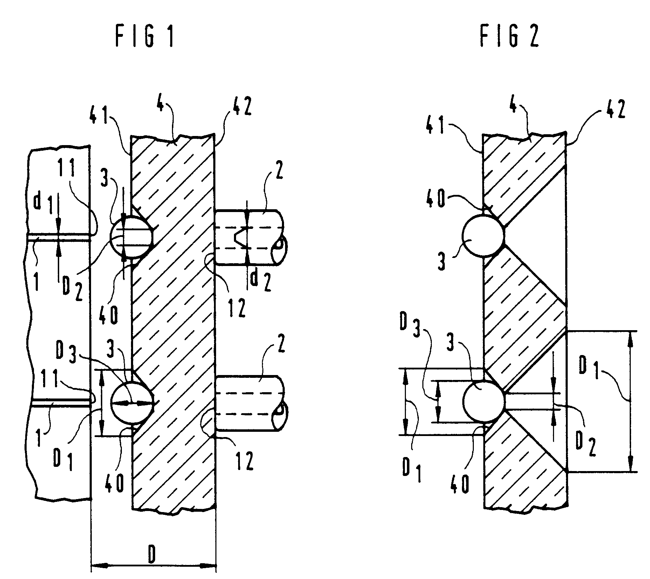

Beim ersten Ausführungsbeispiel nach Figur 1 weist die den ersten Wellenleitern zugekehrte Flachseite 41 der Platte 4 die Vertiefungen 40 auf, die sich von dieser Flachseite 41 in Richtung zur anderen Flachseite 42, die den zweiten Wellenleitern 2 zugekehrt ist, im Durchmesser konisch von einem Maximaldurchmesser D₁ auf einen Minimaldurchmesser D₂ > 0 verjüngen, auf. Die andere Flachseite 42 weist keine Vertiefungen auf.

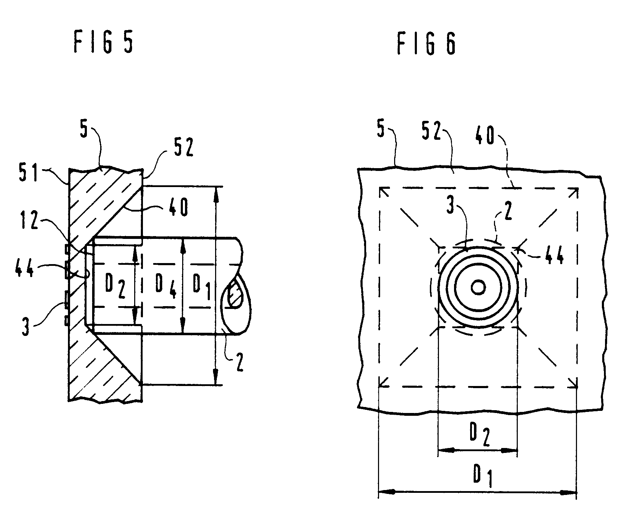

Die Platte 4 besteht vorteilhaft aus Silizium oder einem anderen durch vorzugsätzen ätzbaren Material. Die durch Vorzugsätzen in die Flachseite 41 eingebrachten Vertiefungen 40 sind dann pyramidenstumpfförmig und in Draufsicht quadratisch, so wie es in der Figur 6 angezeigt ist.

In jeder Vertiefung 40 ist eine Kugellinse 3 mit einem Durchmesser D₃ angeordnet, der kleiner als der Maximaldurchmesser D₁ der Vertiefung 40 ist.

Die durch Fasern gebildeten zweiten Wellenleitern 2 stoßen mit ihren Endflächen 12 stumpf an die andere Flachseite 42 der Platte 4 an.

Der Abstand D zwischen den einander gegenüberliegenden Endflächen 11 und 12 der ersten und zweiten Wellenleiter 1 bzw. 2 und der Durchmesser D₃ und die Lage der zwischen diesen Endflächen 11 und 12 angeordneten Kuggellinse 3 sind so bemessen, daß der Fleckdurchmesser d₁ einer im Wellenleiter 1 geführten optischen Welle durch die Linse 3 dem Fleckdurchmesser d₂ der im zweiten Wellenleiter 2 geführten optischen Welle angepaßt wird. Das Material der Platte 4 ist dabei so zu wählen, daß die Platte 4 für die Wellenlänge dieser optischen Welle durchlässig ist. Die Kugellinsen 3 haben einen typischen Durchmesser D₃ von 250 bis 500 µm. Kugellinsen haben überdies den Vorteil, daß sie wesentlich reproduzierbarer herstellbar sind als Fasertaper.

Das zweite Ausführungsbeispiel nach Figur 2 unterscheidet sich vom Ausführungsbeispiel nach Figur 1 lediglich dadurch, daß die Vertiefungen 40 durch von einer Flachseite zur anderen durchgehende Öffnungen definiert sind, die sich von der Flachseite 41 in Richtung zur anderen Flachseite 42 der Platte 4 zunächst vom Maximaldurchmesser D₁ auf den Minimaldurchmesser D₂ konisch verjüngen und ab dieser Stelle sich wieder auf einen Maximaldurchmesser D₁ auf der anderen Flachseite 42 erweitern. Der Maximaldurchmesser D₁ auf der anderen Flachseite 42 der Platte 4 wird zweckmäßigerweise größer als der Durchmesser des zweiten Wellenleiters 2 in Form einer Faser gewählt, so daß dieser Wellenleiter 2 in die durchgehende Öffnung 40 ragen und dadurch besser zentriert werden kann. Bei diesem zweiten Ausführungsbeispiel ist es nicht notwendig, daß die Platte 4 aus einem für die Wellenlänge der in den ersten und zweiten Wellenleitern 1 und 2 geführten optischen Welle transparent ist. Der Minimaldurchmesser D2 ist dabei so zu bemessen, daß sich durch ihn hindurch eine aus einem betreffenden Wellenleiter ausgekoppelte optische Welle ungestört ausbreiten kann.

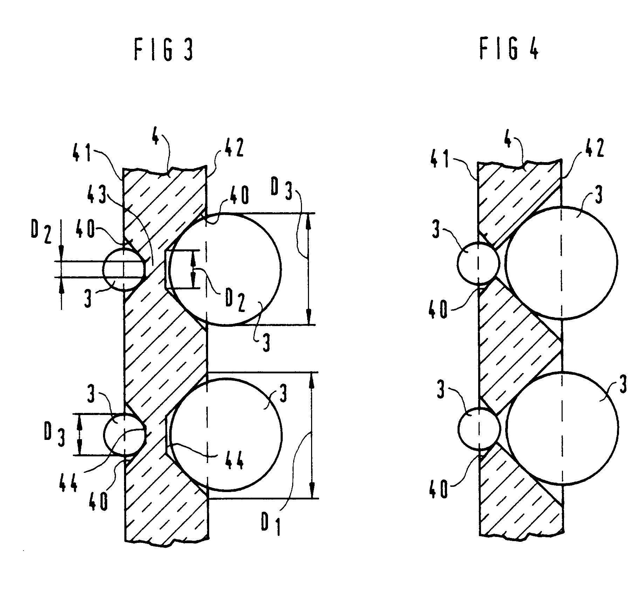

Das dritte Ausführungsbeispiel nach Figur 3 unterscheidet sich von dem ersten Ausführungsbeispiel nach Figur 1 dadurch, daß nicht nur auf der einen Flachseite 41 sondern auch auf der anderen Flachseite 42 Vertiefungen 40 ausgebildet sind, die sich paarweise gegenüberliegen und durch eine Wand 43 aus dem Material der Platte 4 voneinander getrennt sind. Außerdem sind sowohl in den Vertiefungen 40 auf der einen Flachseite 41 als auch in den Vertiefungen auf der anderen Flachseite 42 der Platte 4 jeweils Kugellinsen 3 angeordnet. Jedes in einem Paar einander gegenüberliegender Vertiefungen 40 angeordnete Paar Kugellinsen 3 bildet ein zweilinsiges Abbildungssystem für die einander gegenüberliegenden Endflächen 11 und 12 eines ersten und zweiten Wellenleiters 1 und 2, zwischen denen dieses Paar Kugellinsen 3 angeordnet ist. Für die Bemessung eines solchen Systems besteht ein großer Freiheitsgrad.

Im Beispiel nach Figur 3 sind die Kugellinsen auf der anderen Flachseite 42 der Platte 4 größer ausgebildet als die Kugellinsen 3 auf der einen Flachseite 41, weil der Fleckdurchmesser der in den zweiten Wellenleitern 2 in Form von Fasern geführten optischen Wellen größer ist als der in den ersten Wellenleitern 1 geführten optischen Wellen. Dementsprechend ist auch der Maximaldurchmesser D₁ der Vertiefungen 40 auf der anderen Flachseite 42 größer als der Maximaldurchmesser D₁ der Vertiefungen 40 auf der einen Flachseite 41 der Platte 4 zu wählen.

Im Beispiel nach Figur 3 ist auch der Minimaldurchmesser D₂ jeder Vertiefung 40 auf der anderen Flachseite 42 größer als der Minimaldurchmesser D₂ jeder Vertiefung 40 auf der einen Flachseite 41.

Das vierte Ausführungsbeispiel nach Figur 4 unterscheidet sich vom dritten Ausführungsbeispiel nach Figur 3 lediglich dadurch, daß anstelle der Platte 4 im dritten Ausführungsbeispiel nach Figur 3 eine Platte 4 gemäß dem zweiten Ausführungsbeispiel nach Figur 2 gewählt ist. Während beim dritten Ausführungsbeispiel nach Figur 3 das Material der Platte 4 für die in den Wellenleitern 1 und 2 geführte optische Welle transparent sein muß, ist dies für das Material der Platte 4 nach dem vierten Ausführungsbeispiel nach Figur 4 nicht erforderlich. Während beim zweiten Ausführungsbeispiel nach Figur 2 von der anderen Flachseite 42 der Platte 4 her eine Faser in die Vertiefung 40 ragt, ist beim vierten Ausführungsbeispiel nach Figur 4 auf der anderen Flachseite 42 eine Kugellinse 3 in der Vertiefung 40 in Form der doppelt konischen durchgehenden Öffnung angeordnet.

Die Ausführungsbeispiele nach den Figuren 1 bis 4 haben den Vorteil, daß sich das Rastermaß des durch die Vertiefungen 40 gegebenen Rasters recht genau einhalten läßt. Die Berührungspunkte der Kugellinsen 3 in den pyamidenstumpfförmig geätzten Vertiefungen 40 mit der Platte 4 liegen innerhalb dieser Platte 4, so daß Ausbrüche an den Flachseite 41 oder 42 der Platte 4 keinen Einfluß auf die Zentrierung der Linsen 3 haben. Außerdem sind Kugellinsen wesentlich reproduzierbarer herzustellen als Fasertaper.

Bei dem fünften Ausführungsbeispiel nach den Figuren 5 und 6 weist nicht die den ersten Wellenleitern 1 zugekehrte eine Flachseite 5, sondern die den zweiten Wellenleitern 2 zugekehrte Flachseite 52 der Platte 5 Vertiefungen 40 auf, von denen nur eine dargestellt ist. Auf der einen Flachseite 51 ist gegenüber dieser Vertiefung 40, genaugenommen gegenüber einer Bodenfläche 44 des Minimaldurchmesser D₂ dieser Vertiefung 40, eine planare Linse 3, beispielsweise eine Fresnellinse oder ein Hologramm, angeordnet, die direkt auf der einen Flachseite 51 aufgebracht werden kann. Im einfachsten Fall können binäre Phasen-Fresnellinsen - sogenannte Zonenplatten - verwendet werden. Diese Methode gewährleistet, daß die Lage der Linsenzentren mit der gleichen Genauigkeit von 0,1 bis 0,2 µm wie die der ersten Wellenleiter 1 des IOC eingehalten werden kann. Die Vertiefungen 40 auf der den zweiten Wellenleitern 2 zugekehrten Flachseite 52 der Platte 5 können zur Feinpositionierung dieser zweiten Wellenleiter 2 verwendet werden. Der Maximaldurchmesser D₁ jeder Vertiefung 40 muß dazu größer als der Außendurchmesser D₄ des zweiten Wellenleites 2 sein. Der Minimaldurchmesser D₂ wird zweckmäßigerweise kleiner oder gleich diesem Außendurchmesser D₄ gemacht. Zur Feinpositionierung wird der zweite Wellenleiter 2 mit seiner Endfläche 12 in die betreffende Vertiefung 40 eingeführt, bis er mit deren schrägen Seitenflächen in Berührung kommt. Damit die zwischen der planaren Linse 3 und der Endfläche 12 des zweiten Wellenleiters 2 verbleibende Wand 3 der Platte 5 keine Abbildungsfehler verursacht, muß die Bodenfläche 44 der Vertiefung 40 sehr glatt und eben planparallel zu der den ersten Wellenleitern 1 zugekehrten Flachseite 51 sein. Dies gilt auch für die Anordnungen nach Figur 1 und Figur 3. Um dies sicherzustellen und gleichzeitig die Ätztiefe genau einzuhalten, wird die Platte bis zur Tiefe der Bodenfläche 44 der Viertiefung 40 dotiert, beispielsweise mit Bor, oder ein pn-Übergang eingebaut. Mit geeigneten Ätzflüssigkeiten wird dann erreicht, daß die Ätzung bei einer bestimmten Konzentration des Dotierstoffes stoppt. Die planare Linse 3 könnte auch auf die Bodenfläche 44 der konischen Vertiefung 40 aufgebracht sein.

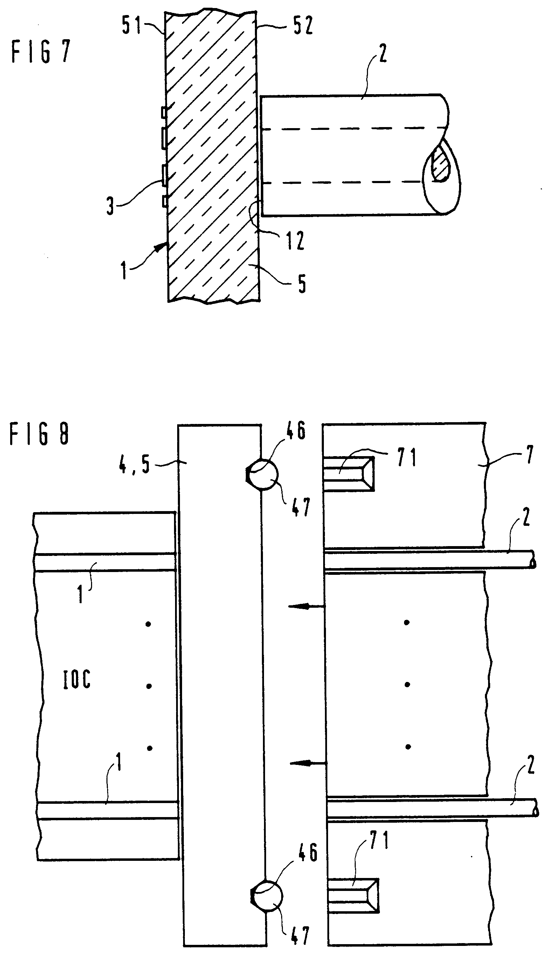

Beim sechsten Ausführungsbeispiel nach Figur 7 ist auf die Feinpositionierung der zweiten Wellenleiter 2 durch Vertiefungen 40 auf der diesen Wellenleitern 2 zugekehrten Flachseite 52 der Platte 5 verzichtet. Bei diesem Ausführungsbeispiel weisen die den ersten und zweiten Wellenleitern 1 und 2 zugekehrten Flachseiten 51 und 52 der Platte 5 keinerlei Vertiefungen auf. Die zweiten Wellenleiter 2 stoßen mit ihren Endflächen 12 lediglich stumpf an die diesen Wellenleitern 2 zugekehrte Flachseite 52 der Platte 5 an. Diese Anordnung ist ebenso wie alle anderen - mit Ausnahme der Anordnung nach Figur 4 - dazu geeignet, zwei Wellenleiterschaltungen (IOC's) mit unterschiedlichen Fleckdurchmessern zu koppeln.

Um die Rasterabstände der zweiten Wellenleiter 2 in Form von Fasern einzuhalten, ist es zweckmäßig, diese Wellenleiter 2 bei allen Ausführungsbeispielen auf einer Oberfläche eines Fixier-Trägerkörpers 7 gemäß Figur 8 zu fixieren, beispielsweise in geätzten V-Nuten eines Fixier-Trägerskörpers 7 aus Silizium. Insbesondere ist es vorteilhaft, zusätzliche Maßnahmen vorzunehmen, die eine selbsttäige Justierung der zweiten Wellenleiter 2 zur rasterförmigen Anordnung der in Figur 8 nicht dargestellten Linsen 3 ermöglichen. Dies kann beispielsweise dadurch erreicht werden, daß auf der den zweiten Wellenleitern 2 zugekehrten Flachseite 42 bzw. 52 der Platte 4 bzw. 5 konische, beispielsweise pyramidenförmige Vertiefungen 46 zur Aufnahme von kleinen Kugeln 47 geätzt werden, die in geeignet geätzte Nuten 71 des Fixier-Trägerkörpers 7 passen und bei einem Zusammenführen der Platte 4 oder 5 und des Fixier-Trägerkörpers 7 ineinandergreifen.

Zur Herstellung der Platte 4 oder 5 bzw. des Fixier-Trägerkörpers 7 für die zweiten Wellenleiter 2 können auch andere Verfahren als die vorstehend beschriebenen eingesetzt werden, welche die geforderte Präzision ermölichen, darunter insbesondere die LIGA-Technologie sowie Abdruck- oder Umkopierverfahren mit in Planartechnologie hergestellten "Mastern". Anstelle von Silizium können auch andere einkristalline Materialien, beispielsweise GaAs, verwendet werden, für die geeignete Vorzugsätzprozesse zur Verfügung stehen. In Strahlengängen liegende Flächen sollten entspiegelt werden.

## Patentansprüche

1. Anordnung zur Erzeugung einer optischen Kopplung zwischen mehreren ersten optischen Wellenleitern (1) und mehreren zweiten optischen Wellenleitern (2),
- wobei die ersten und zweiten Wellenleiter (1, 2) paarweise einander gegenüberliegende und in einem Abstand (D) voneinander angeordnete Endflächen (11, 12) aufweisen, und
- wobei zwischen jedem Paar einander gegenüberliegender Endflächen (11, 12) eines ersten und zweiten Wellenleiters (1, 2) eine optische Linse (3) angeordnet ist, die im Bereich einer auf einer Oberfläche (41, 42) eines Trägerkörpers (4) ausgebildeten und sich von der Oberfläche (41, 42) in Richtung zum Inneren des Trägerkörpers (4) sich im Durchmesser konisch von einem Maximaldurchmesser (_{D1}) auf einen Minimaldurchmesser (D₂) größer null verjüngenden Vertiefung (40) auf dem Trägerkörper (4) gehaltert ist,
**dadurch gekennzeichnet,**
- daß der Trägerkörper (4) aus einer zwischen den einander gegenüberliegenden Endflächen (11, 12) der ersten und zweiten Wellenleiter (1, 2) angeordneten Platte mit einer den ersten Wellenleitern (1) zugekehrten Flachseite (41) und einer den zweiten Wellenleitern (2) zugekehrten Flachseite (42) besteht, und
- daß die Vertiefungen (40) zur Halterung der Linsen (3) auf zumindest einer Flachseite (41, 42) der Platte (4) ausgebildet sind und sich von der einen Flachseite (41, 42) konisch in Richtung zur anderen Flachseite (42 bzw. 41) der Platte (4) im Durchmesser verjüngen.

2. Anordnung zur Erzeugung einer optischen Kopplung zwischen mehreren ersten optischen Wellenleitern (1) und mehreren zweiten optischen Wellenleitern (2),
- wobei die ersten und zweiten Wellenleiter (1) paarweise einander gegenüberliegende und in einem Abstand (D) voneinander angeordnete Endflächen (11, 12) aufweisen, und
- wobei zwischen jedem Paar einander gegenüberliegender Endflächen (11, 12) eines ersten und zweiten Wellenleiters (1, 2) eine optische Linse (3) angeordnet ist, die auf einem Trägerkörper (5) gehaltert ist,
**dadurch gekennzeichnet,**
- daß der Trägerkörper (5) aus einer zwischen den einander gegenüberliegenden Endflächen (11, 12) der ersten und zweiten Wellenleiter (1, 2) angeordneten Platte (5) mit einer den ersten Wellenleitern (1) zugekehrten Flachseite (51) und einer den zweiten Wellenleitern (2) zugekehrten Flachseite (52) und aus einem für eine Wellenlänge einer in den ersten und zweiten Wellenleitern (1, 2) geführten optischen Welle transparenten Material besteht, und
- daß jede optische Linse (3) aus einer zumindest auf einer Flachseite (51, 52) der Platte (5) angeordneten oder ausgebildeten planaren Linse besteht.

3. Anordnung nach Anspruch 1,
**dadurch gekennzeichnet,**
daß die Platte (4) aus einem für eine Wellenlänge einer in den ersten und zweiten Wellenleitern (1, 2) geführten optische Welle transparenten Material besteht.

4. Anordnung nach Anspruch 1 oder 3,
**dadurch gekennzeichnet,**
daß sich der Minimaldurchmesser (_{D1}) einer Vertiefung (40) in einem von null verschiedenen Abstand (a1, a2) von jeder Flachseite (41, 42) der Platte (4) befindet.

5. Anordnung nach Anspruch 3 und 4,
**dadurch gekennzeichnet,**
daß auf beiden Flachseiten (41, 42) der Platte (4) einander gegenüberliegende, durch eine Wand (43) aus dem Material der Platte (4) voneinander getrennte, sich im Durchmesser konisch von einem Maximaldurchmesser (_{D1}) auf einen Minimaldurchmesser (d2) größer null verjüngende Vertiefungen (40) ausgebildet sind.

6. Anordnung nach Anspruch 4,
**dadurch gekennzeichnet,**
daß eine Vertiefung (40) durch eine von einer Flachseite (41, 42) in Richtung zur anderen Flachseite (42 bzw. 41) der Platte (4) durchgehende Öffnung definiert ist, die sich im Durchmesser von einer Flachseite (41, 42) in Richtung zur anderen Flachseite (42 bzw. 41) konisch von einem Maximaldurchmesser (_{D1}) auf den Minimaldurchmesser (_{D1}) verjüngt und sich vom Minimaldurchmesser (_{D1}) in Richtung zur anderen Flachseite (42 bzw. 41) konisch auf einen Maximaldurchmesser (_{D1}) erweitert.

7. Anordnung nach Anspruch 5 oder 6,
**dadurch gekennzeichnet,**
daß der Maximaldurchmesser (_{D1}) der auf einer Flachseite (41, 42) der Platte (4) befindlichen Vertiefungen (40) verschieden ist vom Maximaldurchmesser (_{D1}) der auf der anderen Flachseite (42 bzw. 41) befindlichen Vertiefungen (40).

8. Anordnung nach einem der Ansprüche 5 bis 7,
**dadurch gekennzeichnet,** daß der Minimaldurchmesser (D2) der auf einer Flachseite (41, 42) der Platte (4) befindlichen Vertiefungen (40) verschieden ist vom Minimaldurchmesser (D2) der auf der anderen Flachseite (42 bzw. 41) befindlichen Vertiefungen (40).

9. Anordnung nach einem der Ansprüche 1 und 3 bis 8,
**dadurch gekennzeichnet,** daß in den auf einer Flachseite (41, 42) der Platte (4) befindlichen Vertiefungen (40) Kugellinsen (3) angeordnet und gehaltert sind.

10. Anordnung nach einem der Ansprüche 5 bis 8 und Anspruch 9,
**dadurch gekennzeichnet,**
daß sowohl in den auf einer Flachseite (41, 42) der Platte (4) befindlichen Vertiefungen (40) als auch in den auf der anderen Flachseite (42 bzw. 41) befindlichen Vertiefungen (40) Kugellinsen (3) angeordnet und gehaltert sind.

11. Anordnung nach Anspruch 10,
**dadurch gekennzeichnet,**
daß die in den Vertiefungen (40) verschiedenen Maximal- und/oder Minimaldurchmessers (_{D1}, D2) angeordneten und gehalterten Kugellinsen (3) verschiedenen Durchmesser (D3) aufweisen.

12. Anordnung nach Anspruch 2,
**dadurch gekennzeichnet,**
daß die beiden Flachseiten (51, 52) der Platte (5) vertiefungsfrei sind.

13. Anordnung nach Anspruch 2,
**dadurch gekennzeichnet,**
daß gegenüber einer auf einer Flachseite (51, 52) der Platte (5) angeordneten planaren Linse (3) eine Vertiefung (40) in der anderen Flachseite (52 bzw. 51) der Platte (5) ausgebildet ist, wobei sich die Vertiefung (40) von der anderen Flachseite (52 bzw. 51) in Richtung zur einen Flachseite (51 bzw. 52) konisch von einem Maximaldurchmesser (D1) auf einen Minimaldurchmesser (D2) verjüngt.

14. Anordnung nach Anspruch 12 oder 13,
**dadurch gekennzeichnet,**
daß der Maximaldurchmesser (_{D1}) der Vertiefung (40) größer und der Minimaldurchmesser (D2) dieser Vertiefung (40) kleiner oder gleich einem Außendurchmesser (D₄) einer einen ersten oder zweiten Wellenleiter (1, 2) bildenden optischen Faser ist.

15. Anordnung nach Anspruch 12 oder 13,
**dadurch gekennzeichnet,**
daß in einer Vertiefung (40) eine Kugellinse angeordnet oder gehaltert ist.

16. Anordnung nach einem der vorhergehenden Ansprüche,
**gekennzeichnet durch**
eine Justiervorrichtung zum selbsttätigen Justieren der Endflächen (11, 12) der ersten und zweiten Wellenleiter (1, 2) auf die Vertiefungen (40) und/oder optischen Linsen (3).

17. Anordnung nach Anspruch 16,
**dadurch gekennzeichnet**
daß die Justiervorrichtung einen Fixier-Trägerkörper (7) aufweist, auf den entweder die ersten oder die zweiten Wellenleiter (1, 2) in der gleichen Anordnung wie die optischen Linsen (3) befestigt sind, und daß auf der Platte (4; 5) und auf dem Fixier-Trägerkörper (7) Justiervorsprünge (47) und -vertiefungen (71) ausgebildet sind, die beim Zusammenführen der Platte (4; 5) und des Fixier-Trägerkörpers (7) ineinandergreifen.

18. Anordnung nach einem der Ansprüche 1, 3 bis 11 oder 13 bis 17**, dadurch gekennzeichnet,** daß die Vertiefungen (40) und/oder Nuten zur Aufnahme und Befestigung optischer Fasern (2) mittels Planartechnologie und Vorzugsätzen in einem anisotrop ätzbaren Material hergestellte Vertiefungen oder Nuten sind.

19. Anordnung nach Anspruch 18,
**dadurch gekennzeichnet,** daß das anisotrop ätzbare Material aus Silizium besteht.
